# EUROPEAN PATENT SPECIFICATION

(11) **EP 3 595 579 B1**
(45) Date of publication and mention of the grant of the patent: **20.01.2021**
(21) Application number: 18720388.0
(22) Date of filing: 28.02.2018
(51) Int. Cl.: A61C 17/02, A61C 1/00, A61C 1/05

(54) **APPARATUS FOR CONTROLLING THE FLEXIBILITY AND STIFFNESS OF A SUPERELASTIC ENDODONTIC FILE**
VORRICHTUNG ZUR STEUERUNG DER FLEXIBILITÄT UND STEIFIGKEIT EINER SUPERELASTISCHEN ENDODONTISCHEN FEILE
APPAREIL POUR COMMANDER LA FLEXIBILITÉ ET LA RIGIDITÉ D'UNE LIME ENDODONTIQUE SUPER-ÉLASTIQUE

(30) Priority: 13.03.2017 IT 201700027275
(43) Date of publication of application: 22.01.2020
(73) Proprietor: PLOTINO, Gianluca, 00187 Rome (IT); Grande, Nicola Maria, 00187 Rome (IT)
(72) Inventor: FORTUNATO, Leonzio, 84077 - Torre Orsaia (SA) IT (IT); PLOTINO, Gianluca, 00187 Rome (IT); GRANDE, Nicola Maria, 00187 Rome (IT)
(74) Representative: Conti, Marco
(86) International application number: PCT/IT2018/000028
(87) International publication number: WO 2018/167807

(56) References cited:
- WO-A1-2013/033856
- WO-A2-2005/032393
- US-A- 5 123 839
- US-A- 5 893 713
- US-A1- 2002 182 564

## Description

### TECHNICAL FIELD OF THE INVENTION

The present invention relates to the technical field of dental medical systems and methods implemented by endodontic handpieces. More particularly, the present invention is related to an apparatus for controlling and regulating the flexibility and stiffness of an endodontic super-elastic file.

### BACKGROUND

A handpiece for endodontic treatments is basically composed by a motor unit including a motor or turbine having a rotatable motor shaft and a file coupling unit removably coupled to the motor unit and provided with a head to which the file is removably fixed and coupled, the head rotating the file upon rotation or reciprocation or oscillation of the motor shaft.

Development of handpieces and drilling techniques has seen the migration into these endodontic intruments of new technologies and materials such as superelastic materials. Indeed, endodontic files made of materials based on super-elastic alloys (e.g. Nickel-Titanium - NiTi) are an important part of the root canal instrumentarium.

For instance, the NiTi (namely Nitinol) is a near equiatomic intermetallic of nickel and titanium capable of exhibiting superelastic behaviour due to a stress-induced phase transformation, or shape-memory due to a temperature-induced phase transformation.

The NiTi alloy exists in two different crystal phases, martensite and austenite, which are temperature dependent. When martensitic NiTi is heated, it begins to change to austenite, and once converted to austenite, the alloy will have completed its shape-memory transformation and will display its superelastic characteristics. The temperature at which this phenomenon is complete is called the austenite finish temperature (Af). We will assume Af as a trasition temperature T in the following.

The introduction of these new materials permitted to use more flexible files in order to reduce the risk of intracanal fracture of the endodontic file.

Nevertheless, none of these solutions permits neither to improve the drilling technique in such a way to reach all parts of the root canal under treatment, especially in case of particular root canal configurations, nor to completely exclude the existing risk of intracanal fracture.

As a matter of fact, present files are suggested to be single-use due to the metal fatigue accumulation.

WO 2013/033856 A1 discloses a dental handpiece comprising a super-elastic file which can be heated up by an energy source or by warm fluid directed towards the file to modify its shape during treatment.

Therefore, the aim of the proposed invention is to avoid the drawbacks of the traditional NiTi alloy, namely separation and distortion of instruments, and of the traditional drilling techniques, developing a device implementing a method for controlling the flexibility and stiffness of an endodontic super-elastic file.

The proposed solution permits to adapt the flexibility of each file at the single clinical case to reduce the main problem, namely the risk of intracanal fracture of the file.

Moreover, the invention permits to improve the quality of the treatment in particular in severely or abruptly curved and narrow root canals with respect to the traditional endodontic techniques.

Another advantage offered by the proposed invention is the possibility to safely use the same endodontic file in a greater number of treatments, with a reduced risk of intracanal fracture. Further advantages will be more clear from the detailed description of the invention.

### DETAILED DESCRIPTION OF THE INVENTION

Since a common mechanical endodontic file is made of materials based on super-elastic alloys having a transition temperature T, we developed a method for controlling the flexibility and stiffness of such file during the intracanal treatment, whereby the method does not form part of the claimed invention.

The first step of the method consists in the selection of a specific file, having a transition temperature T, among a set of super-elastic files with shape-memory characteristics and transition temperatures T comprised in a specific range between T₁ and T₂.

The selection is carried out by empirical measures of T, such as the well-known differential scanning calorimetry (DSC) already used for orthodontic wires [Ref.-1] or, alternatively, exploiting the well-established correlation between the fatigue resistance and the flexibility of the files under thermomechanical treatment [Ref.-2].

Before the shaping operation starts, the selected file is at the starting temperature Ts which can be the room temperature (20°C) or the intracanal temperature (e.g. 35-36°C), or is regulated to a specific value.

The next step of the method consists in adjusting the temperature of the file in order to modify its stiffness and making it more flexible or stiffer exploiting the super-elastic characteristics during the intracanal treatment. The temperature of the file may be adjusted thanks to a dedicated heating and cooling system which is managed by a control unit (CU) and a heat regulator (32), to an adjusted temperature Tₐ > T in order to make it hard and stiff, and Tₐ < T in order to make it soft and flexible. During the shaping operation the torque is measured and the adjusted temperature Tₐ is calculated according to a specific torque-temperature relationship. In the simplest cases the torque-temperature relationship can be a standard polynomial or exponential or a negative power function, but also other functions and complex combinations between them are possible.

Both the starting temperature T_{S} of the file and the torque-temperature relationship are initially set by the clinician according to the needs of the treatment, i.e. the root canal configuration. The temperature adjustment of the file can be operated either while the file is rotating (if the torque varies slowly respect to a given curve and is below a predetermined threshold) or during a stop period (until the file reaches the new temperature or up to a predetermined time limit set by the user).

This result is achievable and reproducible thanks to the selection of a file with a well-known transition temperature T, performed in the first step of the method, provided that the torque is constantly monitored and the temperature of the file is kept under control during the treatment.

It has to be stressed that the control of the temperature is crucial for the outcome of the method and to prevent possible undesired effects.

Indeed, since it is not clear how much heat is produced by friction of a file on the root canal wall during the shaping, it's not possible to exploit straightforwardly such heat in order to modify the flexibility of the file and to obtain a precise and well-controlled technical effect.

For instance, if the heat produced during the drilling operation leads to a temperature rise lower than 1.5 °C it could be insufficient to change the crystal phases of the super-elastic alloy from. On the other hand, if the temperature rise is higher than 1.5°C it could make the file stiffer during the intracanal shaping, especially when the file has a transition temperature around the intracanal temperature, even when more flexibility is needed because of the severe canal curvature and shape.

In both cases the drilling heat could lead to undesired and uncontrolled effects on the file, which can be prevented keeping under control the temperature of the file.

Moreover, in some cases the stress-induced phase transformation to martensitic state occurring during the intracanal shaping represents a drawback for the outcome of the treatment. The proposed invention permits to counteract this effect with a thermal-induced phase transformation to austenitic state by a controlled temperature adjustment of the file.

Therefore, it has been developed a dedicated apparatus in order to implement the above-mentioned method which allows to keep under control the stiffness and flexibility of a selected endodontic file, avoiding all those possible drawbacks occurring during the intracanal shaping.

The apparatus, according to claim 1 consists in an endodontic handpiece comprising an endodontic file made of a super-elastic alloy based material which has been selected in order to have a desired transition temperature T among a set of endodontic files with transition temperature T in the range between T₁ and T₂, said apparatus including a heating and cooling system designed to adjust the temperature of the file before and during the intracanal shaping.

In addition to the heating and cooling system, that is the fundamental part of the apparatus, there is a control system comprising a heat regulator (32) and a programmable Control Unit (CU) able to acquire data coming from the motor and from other parts of the apparatus and to operate settings on the heat regulator (32) according to mathematical relationships between torque, or motor speed, and temperature.

Therefore, not only can the CU decrease or stop and reverse rotation once the set torque limit has been reached, but also it can change the temperature of the file and consequently adjust its stiffness and flexibility. The CU can be either part of the handpiece or an external device connected to the handpiece with proper cablings, and could be switched to a manual mode so as to calculate and display the temperature, leaving the clinician free to make manual settings. Many types of handpieces comprising piping and nozzles to spread coolant fluids on the teeth have been already produced, but only with the aim to reduce the tooth temperature in order to avoid the possible thermal irritation of teeth resulting from the heat produced by friction during dental treatment procedures, such as the removal of tooth structures during the canal preparation. Despite the fact that, according to some studies [Ref.-3], the heat produced during the tooth preparation with low- and high-speed handpieces seems to increase the intrapulpar temperature of 1.8°C and 1.4 °C respectively, it is still not clear how much heat is actually produced by friction of a file on the root wall during the shaping operation. Furthermore, in some cases the cooling of the canal, especially a straight and narrow canal, could be a drawback considering that the sum of the effects of the stress-induced transition and the temperature-induced transition to martensitic state increases the risk of fracture by torsion. Therefore the file should be heated in the case of a straight and constricted canal in order to be stiffer and should be cooled near the curvature, not near the tip, in the case of the curved canal to be more flexible. This result is obtained by the proposed invention with the heating and cooling system which induces a temperature variation mainly near the larger portion of the file so as to obtain a temperature gradient up to the tip of the file, possibly leaving the heat produced by friction on the tip to counteract the stress-induced transition to the martensitic state. More conveniently the invention permits to heat a selected file having T > 35 °C up to its austenitic phase and consequently cool it down, near the curvature, below the transition temperature during the shaping operation. On the other hand, in the case of a straight and narrow canal, a file preferably selected to be in austenitic phase at intracanal temperature, can be entirely heated and stiffened, as well as a martensitic file at intracanal temperature is selected.

### EMBODIMENTS AND DRAWINGS

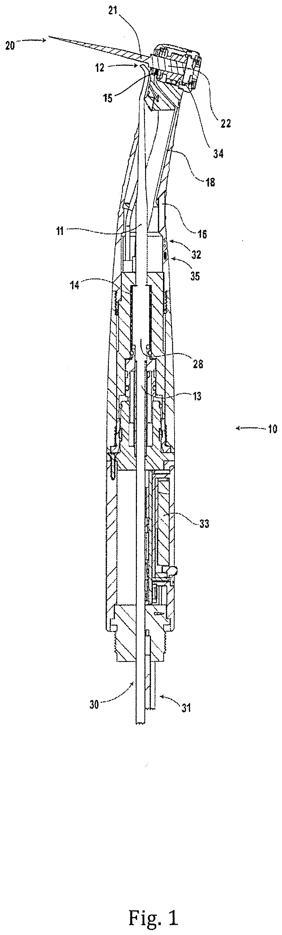

In a first embodiment (Fig. 1) of the method, which does not form part of the claimed invention, is carried out by an endodontic handpiece (10) comprising the endodontic superelastic file (20) and at least one duct (11) for spreading fluids from the orientable nozzle (12) which are properly heated and cooled by an external heating and cooling device to which the handpiece is connected by at least one dedicated piping (30) and that is managed by a heat regulator (32) placed on the handpiece or by an external device (e.g. pedals). Alternatively the fluids can be provided initially at a low temperature and heated up to a desired temperature by a heating system realized inside the handpiece with a heating chamber (28) along the inner piping (13), where said heating chamber is heated by an electrical heating means (14), e.g. a wire resistor surrounding the heating chamber or a ceramic material around which the wire resistor is coiled up (e.g. a cylindrical ceramic heater). The heating chamber (28) could also host a coiled portion of the piping (13) in order to better regulate the temperature of the flowing fluid. In both cases a possible heat control means for the heating system can be a heat regulator (32) realized inside the handpiece (e.g. a potentiometer or on/off button and +/- power buttons or a rotary power control knob) or an external one (e.g. pedals). The heating and cooling fluid can be a gas or any kind of irrigating solution. The temperature of the file is measured by a probe (15), e.g. a termocouple, placed at 1.0 - 1.5 mm from the end of the head portion of the file. The measured temperature is shown by a temperature display (16) connected to a Control Unit to which the probe (15) is connected by wirings (18). The control unit also acquires the speed and the torque of the motor and of the rotary portion (34) in order to automatically set the temperature on the heat regulator (32) and regulate the rotation speed of the motor. The motor speed is provided by the motor itself or is measured by a tachometer or an encoder, and the torque is measured by the current that the motor is drawing or even calculated from the well-known torque-speed relationship. The control unit may even be external to the handpiece to which is connected by wirings (31), and can also be switched to a manual mode in order to calculate and display the temperature, leaving the clinician to make settings manually.

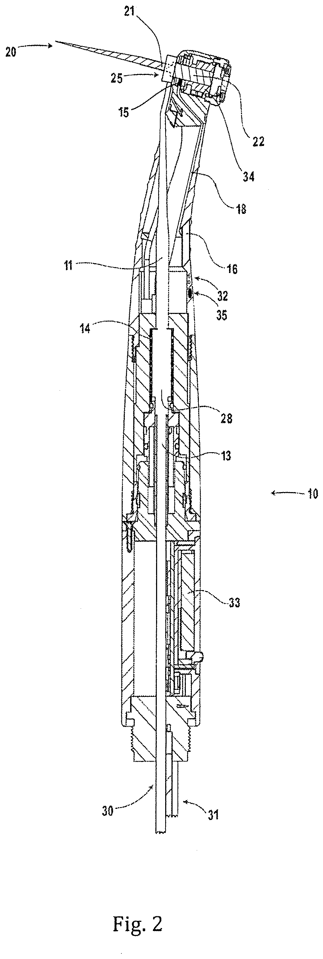

A possible alternative to the first embodiment (Fig. 2) includes a fluid containment chamber (25) filled with the fluid which flows, continuously or not, through two pipes (11) to get in and out of said chamber (25), so that the neck portion (21) of the file (20) is immersed in the fluid and the file is heated or cooled, being it in direct contact with the fluid kept at a desired temperature.

In both cases the fluids are pumped either by an internal pump or an external one (not shown in the figures) and the flow is managed by a flow control means (35), e.g. buttons onto the handpiece, or by external commands (e.g. pedals).

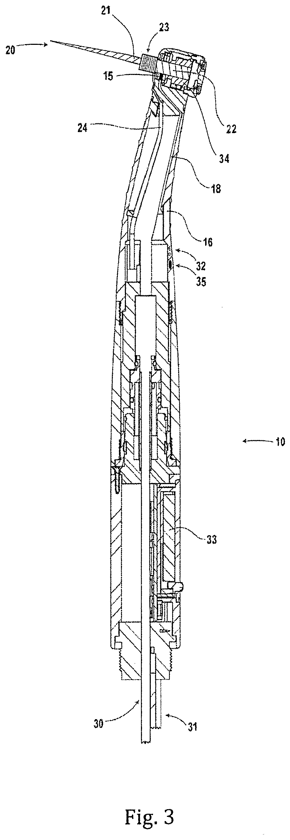

In a second embodiment (Fig. 3) of the claimed invention the heating system is an electrical heating system (23) realized by an electrical resistor, e.g. a wire resistor, placed onto the external surface of the handpiece on the edge of the hole where the file is inserted in order to surround the neck portion (21) of the endodontic file (20), near the head portion (22). Alternatively the electrical heating system (23) consists of a small protrusion, preferably of cylindrical shape, made of metallic or ceramic material around wich the wire resistor is coiled up (e.g. a cylindrical ceramic heater). The electrical wire reaches the electrical resistor or ceramic heater through a dedicated wiring duct (24).

A possible alternative for the second embodiment is realized including an inner rotary portion in the electrical heating system (23) comprising a set of bearings in order to keep in contact said electrical heating system (23) with the neck portion (21) of the file (20), even placing the electrical heating system (23) near or inside the rotary portion (34) (the rotatable shaft, inside the head of the handpiece).

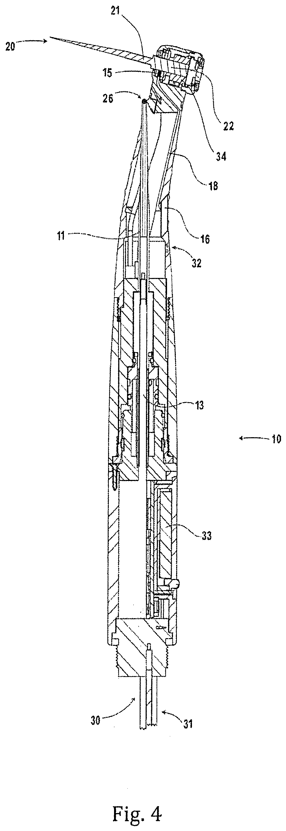

In a third embodiment (Fig. 4) of the claimed invention the heating system is a high power laser diode (26) placed onto the handpiece, or in a hollow in the handpiece, and the laser beam is oriented towards the neck portion (21) of the endodontic file (20). Alternatively the high power laser diode is placed inside the handpiece, lighting up an optical fiber which transmits the laser radiation to its end in the hole of the handpiece where the laser beam is pointed toward the neck portion (21), near the head portion (22) of the endodontic file (20). In this case the optical fiber may also be oriented towards different portions of the endodontic file (20).

In all the embodiments the electrical heating means are powered by dedicated external wirings (31) from an external power system, but it is not excluded the possibility to include in the handpiece an internal power source, such as a dedicated power battery (33), whereas the electrical current and the produced heat can be regulated by the heat regulator (32).

The temperature of the file is measured in the same way, i.e. by the probe or termocouple (15), but in the second and third embodiment it could be calculated from the electric current flowing inside the electrical heating system and from the power absorption of the power laser diode, which could be measured in a simple way.

Furthermore, the probe (15) and the display (16) could be either powered by the power battery (33) independently from the power circuit of the heating system, or they could be all included in the same power circuit, powered by the battery (33) or by an external power system.

The three embodiments could be also properly combined in such a way to obtain an apparatus with mixed heating and cooling systems so as to implement the method in claims 1-4.

A non-limiting example of a combined or mixed heating and cooling system is a fluid containment chamber (25), preferably made of metal, composed by an outer sealed cylinder filled with the fluid which is provided by the pipes (11), and an inner cylinder coupled to the outer one by bearings and being in contact with the file (20). Besides, the outer part of the containment chamber (25) could be surrounded by an electrical heating system (23). In this case the fluid can flow at low temperature so that the file is kept to a temperature lower than its transition temperature T, but it can also be heated by the electrical heating system (23) keeping the fluid at rest inside the containment chamber (25), and consequently cooled down allowing the fluid to flow also switching off the electrical heating system (23), if necessary. Moreover, the probe (15), or even a second probe, could also be placed inside the containment chamber (25) in order to measure the temperature of the fluid and of the file (when the thermal equilibrium is reached).

In a possible alternative to the previous example of mixed heating and cooling system, the cooling system is the fluid containment chamber (25) (both types, with or without bearings and rotary part, are possible) whereas the heating system is the electrical heating system (23), so that they are two independent systems which can be either separated or contiguous each other along the central axis of the file.

In each embodiment we can consider, as non-limiting examples, the following cases:
- a selected super-elastic file with a transition temperature T < 30 °C where the file is in austenitic state both at room and intracanal temperature. In this case the file may take advantage being cooled in order to increase its flexibility and reduce the risk for intracanal fracture particularly in curved root canals.
- a selected super-elastic file with a transition temperature T > 45 °C where the file is in martensitic state both at room and intracanal temperature. In this case, being the file already flexible enough to well perform in curved canals, the file may take advantage being heated in order to reduce the risk for fracture by torsion in particularly constricted canals. Moreover, it may also take advantage being cooled in order to increase its original flexibility and reduce the risk for intracanal fracture in severely curved root canals.
- a selected super-elastic file with a transition temperature T in the range between 30 and 45°C.

In this case the file may take both advantages being cooled and heated, representing the ideal situation in which the clinician may adjust such parameters in a well- controlled way in order to reach the optimal adaptation to each different clinical case.

### REFERENCES

[Ref.-1] : Bradley TG, Brantley WA, Culbertson BM. - "Differential scanning calorimetry (DSC) analyses of superelastic and nonsuperelastic nickel-titanium orthodontic wires" - Am J Orthod Dentofacial Orthop 1996;109:589-97.
[Ref.-2] : De-Deus G, Silva EJ, Vieira VT, Belladonna FG, Elias CN, Plotino G, Grande NM. "Blue Thermomechanical Treatment Optimizes Fatigue Resistance and Flexibility of the Reciproc Files". J Endod 2017 Jan 25, DOI:10.1016/j.joen.2016.10.039
[Ref.-3] : Su-Jung Kwon, Yoon-Jung Park, Sang-Ho Jun, Jin-Soo Ahn, In-Bog Lee, Byeong-Hoon Cho, Ho-Hyun Son, and Deog-Gyu Seo - "Thermal irritation of teeth during dental treatment procedures" - Restorative Dentistry & Endodontics - Published online 2013 Aug 23. doi: 10.5395/rde.2013.38.3.105

## Claims

1. Apparatus for controlling and regulating the flexibility and stiffness of an endodontic super-elastic file (20), composed by a hand-piece (10) comprising a super-elastic file having a transition temperature T with a head portion (22) connected to the hand-piece, a contiguous neck portion (21) and a cutting portion up to the tip, said apparatus including file temperature measurements means (15), motor speed and torque measurement means, an inner piping (13) for fluids, and a heating and cooling system managed by a programmable Control Unit (CU), wherein the heating and cooling system is suitable for adjusting the temperature of said file (20) from a starting temperature Ts to an adjusted temperature Tₐ, wherein said heating and cooling system is made of at least one duct (11) where cooling and heating fluids can flow towards the file (20), a nozzle (12) for spreading said fluids towards the file (20) and connected to said duct (11), and in that it comprises flow control means (35) in order to activate and control the spreading of the fluids, means for regulating the fluids temperature (32) and displaying means (16) to visualize settings and measurements, wherein said CU acquires the torque and the starting temperature Ts of the file and calculates a temperature value Tₐ according to a mathematical relationship with the measured torque, shows all values on the displaying means (16) and sets the means for regulating the fluids temperature (32) to said value Tₐ, so that the file is heated to a temperature Tₐ > T or cooled to a temperature Tₐ < T in order to control its flexibility and stiffness.

2. Apparatus for controlling and regulating the flexibility and stiffness of an endodontic file according to the previous claim, **characterized in that** the temperature Tₐ is calculated by the CU according to a linear or polynomial relationship with the measured torque, wherein the degree of the polynomial is greater than or equal to 2.

3. Apparatus for controlling and regulating the flexibility and stiffness of an endodontic file according to claim 1, **characterized in that** the temperature Tₐ is calculated by the CU according to an exponential function or a power function of the measured torque, or a combination of these functions.

4. Apparatus for controlling and regulating the flexibility and stiffness of an endodontic file according to one of the previous claims **characterized in that** the heating and cooling system of the file comprises a fluid containment chamber (25) filled with the fluid which can flow, continuously or not, through two ducts (11) to get in and out of said chamber, so that the neck portion (21) of the file (20) is immersed in the fluid.

5. Apparatus for controlling and regulating the flexibility and stiffness of an endodontic file according to one of the previous claims comprising a heating chamber (28) placed between the inner piping (13) and the at least one duct (11) wherein said heating chamber (28) is heated by electrical heating means (14) powered by an external power system or by a dedicated power battery (33).

6. Apparatus for controlling and regulating the flexibility and stiffness of an endodontic file according to claims 1-3 **characterized in that** the heating and cooling system comprises an electrical heating system (23) surrounding the neck portion (21) of the file (20), wherein said electrical heating system (23) is powered through electrical wires placed in a duct (24).

7. Apparatus for controlling and regulating the flexibility and stiffness of an endodontic file according to the previous claim **characterized in that** the electrical heating system (23) comprises an inner rotary portion with a set of bearings in order to keep in contact said electrical heating system (23) with the neck portion (21) of the file (20) or with the head portion (22) of the file, near or inside the rotary portion (34) of the motor to which the file is fastened, and wherein the electrical heating system (23) is powered by a dedicated power battery (33).

8. Apparatus for controlling and regulating the flexibility and stiffness of an endodontic file according to claim 4 **characterized in that** the fluid containment chamber (25) is preferably made of metal and is composed by an outer sealed container filled with the fluid which is provided by the ducts (11), and an inner cylinder coupled to the outer container by bearings and being in contact with the file (20), and **characterized in that** the outer part of the containment chamber (25) is surrounded by an electrical heating system (23).

9. Apparatus for controlling and regulating the flexibility and stiffness of an endodontic file according to claims 1-3 **characterized in that** the heating an cooling system comprises heating means composed by a power laser diode (26) placed in a casing onto the hand-piece, or in a hollow into the hand-piece, and oriented towards the file (20).

10. Apparatus for controlling and regulating the flexibility and stiffness of an endodontic file according to the previous claim wherein the laser diode (26) is placed inside the hand-piece and **characterized in that** said hand-piece comprises an optical fiber, between the laser diode and the exit hole for the laser beam, allowing the transmission of the laser radiation from the diode to the hole from where the laser beam can be oriented toward a portion of the file (20).

## Patentansprüche

1. Vorrichtung zur Steuerung und Regulierung der Flexibilität und Steifigkeit einer endodontischen superelastischen Feile (20), die aus einem Handstück (10) besteht, umfassend eine superelastische Feile aufweisend eine Übergangstemperatur T mit einem Kopfabschnitt (22), der mit dem Handstück verbunden ist, einen zusammenhängenden Halsabschnitt (21) und einen Schneidabschnitt bis zur Spitze, wobei die Vorrichtung Feilen-Temperaturmessmittel (15), Motordrehzahl- und Drehmomentmessmittel, eine innere Rohrleitung (13) für Fluide und ein Heiz- und Kühlsystem, das von einer programmierbaren Steuereinheit (CU) verwaltet wird, enthält, wobei das Heiz- und Kühlsystem zum Einstellen der Temperatur der Feile (20) von einer Starttemperatur Ts auf eine eingestellte Temperatur Tₐ geeignet ist, wobei das Heiz- und Kühlsystem aus mindestens einem Kanal (11), in dem Kühl- und Heizfluide in Richtung der Feile (20) fließen können, einer Düse (12) zum Verteilen der Fluide in Richtung der Feile (20) und mit dem Kanal (11) verbunden, besteht, und dadurch dass sie Durchflusssteuermittel (35) zum Aktivieren und Steuern der Verteilung der Fluide, Mittel zum Regulieren der Fluidtemperatur (32) und Anzeigemittel (16) zum Visualisieren von Einstellungen und Messungen umfasst, wobei das CU das Drehmoment und die Starttemperatur Ts der Feile erfasst und einen Temperaturwert Tₐ gemäß einer mathematischen Beziehung mit dem gemessenen Drehmoment berechnet, alle Werte auf den Anzeigemitteln (16) zeigt und die Mittel zum Regulieren der Fluidtemperatur (32) auf den Wert Tₐ einstellt, so dass die Feile auf eine Temperatur Tₐ > T erhitzt wird oder auf eine Temperatur Tₐ < T abgekühlt, um seine Flexibilität und Steifigkeit zu steuern.

2. Vorrichtung zur Steuerung und Regulierung der Flexibilität und Steifigkeit einer endodontischen Feile nach dem vorhergehenden Anspruch, **dadurch gekennzeichnet, dass** die Temperatur Ta vom CU gemäß einer linearen oder polynomiellen Beziehung mit dem gemessenen Drehmoment berechnet wird, wobei der Grad des Polynoms größer ist als oder gleich 2.

3. Vorrichtung zur Steuerung und Regulierung der Flexibilität und Steifigkeit einer endodontischen Feile nach Anspruch 1, **dadurch gekennzeichnet, dass** die Temperatur Ta vom CU gemäß einer Exponentialfunktion oder einer Leistungsfunktion des gemessenen Drehmoments oder einer Kombination dieser Funktionen berechnet wird.

4. Vorrichtung zur Steuerung und Regulierung der Flexibilität und Steifigkeit einer endodontischen Feile nach einem der vorhergehenden Ansprüche, **dadurch gekennzeichnet, dass** das Heiz- und Kühlsystem der Feile eine Fluidaufnahmekammer (25) umfasst, die mit dem Fluid gefüllt ist, das kontinuierlich oder nicht durch zwei Kanäle (11) fließen kann, um in die Kammer hinein und aus dieser heraus zu gelangen, so dass der Halsabschnitt (21) der Feile (20) im Fluid eingetaucht wird.

5. Vorrichtung zur Steuerung und Regulierung der Flexibilität und Steifigkeit einer endodontischen Feile nach einem der vorhergehenden Ansprüche, umfassend eine Heizkammer (28), die zwischen der inneren Rohrleitung (13) und dem mindestens einen Kanal (11) angeordnet ist, wobei die Heizkammer (28) durch elektrische Heizmittel (14) beheizt wird, die von einem externen Versorgungssystem oder von einer speziellen Versorgungsbatterie (33) gespeist werden.

6. Vorrichtung zur Steuerung und Regulierung der Flexibilität und Steifigkeit einer endodontischen Feile nach den Ansprüchen 1-3, **dadurch gekennzeichnet, dass** das Heiz- und Kühlsystem ein elektrisches Heizsystem (23) umfasst, das den Halsabschnitt (21) der Feile (20) umgibt, wobei das elektrische Heizsystem (23) über elektrische Drähte, die in einem Kanal (24) angeordnet sind, gespeist wird.

7. Vorrichtung zur Steuerung und Regulierung der Flexibilität und Steifigkeit einer endodontischen Feile nach dem vorhergehenden Anspruch, **dadurch gekennzeichnet, dass** das elektrische Heizsystem (23) einen inneren Drehabschnitt mit einem Satz von Lagern umfasst, um das elektrische Heizsystem (23) mit dem Halsabschnitt (21) der Feile (20) in Kontakt oder mit dem Kopfabschnitt (22) der Feile nahe oder innerhalb des Drehabschnitts (34) des Motors, an dem die Feile befestigt ist, zu halten und wobei das elektrische Heizsystem (23) von einer speziellen Versorgungsbatterie (33) gespeist wird.

8. Vorrichtung zur Steuerung und Regulierung der Flexibilität und Steifigkeit einer endodontischen Feile nach Anspruch 4, **dadurch gekennzeichnet, dass** die Fluidaufnahmekammer (25) vorzugsweise aus Metall hergestellt ist und aus einem äußeren versiegelten Behälter, der mit dem Fluid gefüllt ist, das von den Kanälen (11) bereitgestellt wird und einem inneren Zylinder besteht, der durch Lager mit dem äußeren Behälter verbunden ist und mit der Feile (20) in Kontakt steht und **dadurch gekennzeichnet, dass** der äußere Teil der Aufnahmekammer (25) von einem elektrischen Heizsystem (23) umgeben ist.

9. Vorrichtung zur Steuerung und Regulierung der Flexibilität und Steifigkeit einer endodontischen Feile nach den Ansprüchen 1-3, **dadurch gekennzeichnet, dass** das Heiz- und Kühlsystem Heizmittel umfasst, die aus einer Leistungslaserdiode (26) bestehen, die in einem Gehäuse auf dem Handstück oder in einer Vertiefung im Handstück angeordnet und in Richtung der Feile (20) ausgerichtet ist.

10. Vorrichtung zur Steuerung und Regulierung der Flexibilität und Steifigkeit einer endodontischen Feile nach dem vorhergehenden Anspruch, wobei die Laserdiode (26) innerhalb des Handstücks angeordnet ist und **dadurch gekennzeichnet, dass** das Handstück eine optische Faser zwischen der Laserdiode und dem Austrittsloch für den Laserstrahl umfasst, wodurch die Übertragung der Laserstrahlung von der Diode zu dem Loch ermöglicht wird, von dem aus der Laserstrahl auf einen Abschnitt der Feile (20) ausgerichtet werden kann.

## Revendications

1. Appareil pour commander et régler la flexibilité et la rigidité d'une lime endodontique super-élastique (20), composé d'une pièce à main (10) comprenant une lime super-élastique ayant une température de transition T avec une partie de tête (22) reliée à la pièce à main, une partie de col (21) contiguë et une partie coupante jusqu'à la pointe, ledit appareil incluant des moyens de mesure (15) de la température de la lime, des moyens de mesure de la vitesse du moteur et du couple, une tuyauterie interne (13) pour les fluides, et un système de chauffage et de refroidissement géré par une unité de contrôle programmable (UCP), dans lequel le système de chauffage et de refroidissement est adapté pour ajuster la température de ladite lime (20) à partir d'une température de départ Ts à une température ajustée Tₐ, dans lequel ledit système de chauffage et de refroidissement est constitué d'au moins un conduit (11) où les fluides de refroidissement et de chauffage peuvent s'écouler vers la lime (20), une buse (12) servant à faire circuler lesdits fluides vers la lime (20) et reliée au dit conduit (11), et en ce qu'il comprend des moyens de commande (35) de débit afin d'activer et de commander la circulation des fluides, des moyens servant à régler la température des fluides (32) et des moyens d'affichage (16) servant à visualiser les réglages et les mesures, dans lequel ladite UCP acquiert le couple et la température de départ Ts de la lime et calcule une valeur de température Tₐ selon une relation mathématique avec le couple mesuré, affiche toutes les valeurs sur les moyens d'affichage (16) et règle les moyens de réglage de la température des fluides (32) sur ladite valeur Tₐ, de sorte que la lime soit chauffée à une température Tₐ > T ou refroidie à une température Tₐ < T afin de commander sa flexibilité et sa rigidité.

2. Appareil pour commander et régler la flexibilité et la rigidité d'une lime endodontique selon la revendication précédente, **caractérisé en ce que** la température Tₐ est calculée par l'UC selon une relation linéaire ou polynomiale avec le couple mesuré, dans lequel le degré du polynôme est supérieur ou égal à 2.

3. Appareil pour commander et régler la flexibilité et la rigidité d'une lime endodontique selon la revendication 1, **caractérisé en ce que** la température Tₐ est calculée par l'UC selon une fonction exponentielle ou une fonction de puissance du couple mesuré, ou une combinaison de ces fonctions.

4. Appareil pour commander et régler la flexibilité et la rigidité d'une lime endodontique selon l'une des revendications précédentes, **caractérisé en ce que** le système de chauffage et de refroidissement de la lime comprend une chambre de contenance (25) de fluide remplie du fluide qui peut s'écouler, en continu ou non, à travers deux conduits (11) pour entrer et sortir de ladite chambre, de sorte que la partie de col (21) de la lime (20) soit immergée dans le fluide.

5. Appareil pour commander et régler la flexibilité et la rigidité d'une lime endodontique selon l'une des revendications précédentes, comprenant une chambre de chauffage (28) placée entre la tuyauterie intérieure (13) et l'au moins un conduit (11), dans lequel ladite chambre de chauffage (28) est chauffée par des moyens de chauffage électriques (14) alimentés par un système d'alimentation externe ou par une batterie d'alimentation (33) dédiée.

6. Appareil pour commander et régler la flexibilité et la rigidité d'une lime endodontique selon les revendications 1-3, **caractérisé en ce que** le système de chauffage et de refroidissement comprend un système de chauffage électrique (23) entourant la partie du col (21) de la lime (20), dans lequel ledit système de chauffage électrique (23) est alimenté par des fils électriques placés dans un conduit (24).

7. Appareil pour commander et régler la flexibilité et la rigidité d'une lime endodontique selon la revendication précédente, **caractérisé en ce que** le système de chauffage électrique (23) comprend une partie rotative intérieure avec un ensemble de roulements afin de maintenir en contact ledit système de chauffage électrique (23) avec la partie du col (21) de la lime (20) ou avec la partie de tête (22) de la lime, à proximité ou à l'intérieur de la partie rotative (34) du moteur auquel la lime est fixée, et dans lequel le système de chauffage électrique (23) est alimenté par une batterie d'alimentation (33) dédiée.

8. Appareil pour commander et régler la flexibilité et la rigidité d'une lime endodontique selon la revendication 4, **caractérisé en ce que** la chambre de contenance (25) de fluide est de préférence en métal et est composée d'un récipient extérieur étanche rempli du fluide étant fourni par les conduits (11), et d'un cylindre intérieur couplé au récipient extérieur par des roulements et étant en contact avec la lime (20), et **caractérisé en ce que** la partie extérieure de la chambre de contenance (25) est entourée par un système de chauffage électrique (23).

9. Appareil pour commander et régler la flexibilité et la rigidité d'une lime endodontique selon les revendications 1-3, **caractérisé en ce que** le système de chauffage et de refroidissement comprend des moyens de chauffage composés d'une diode laser de puissance (26) placée dans une enveloppe sur la pièce à main, ou dans un creux dans la pièce à main, et orientée vers la lime (20) .

10. Appareil pour commander et régler la flexibilité et la rigidité d'une lime endodontique selon la revendication précédente, dans lequel la diode laser (26) est placée à l'intérieur de la pièce à main et **caractérisé en ce que** ladite pièce à main comprend une fibre optique, entre la diode laser et le trou de sortie pour le faisceau laser, permettant la transmission du rayonnement laser de la diode au trou à partir duquel le faisceau laser peut être orienté vers une partie de la lime (20).
